(19) **Europäisches Patentamt / European Patent Office / Office européen des brevets**

(11) **EP 3 289 884 B1**

(12) **FASCICULE DE BREVET EUROPEEN**

(45) Date de publication et mention de la délivrance du brevet:
**26.08.2020 Bulletin 2020/35**

(51) Int Cl.:
*A23D 9/00* *(2006.01)*     *A23D 9/04* *(2006.01)*
*A23G 3/34* *(2006.01)*     *A23C 15/04* *(2006.01)*
*A23C 15/16* *(2006.01)*

(21) Numéro de dépôt: **17189148.4**

(22) Date de dépôt: **04.09.2017**

(54) **COMPOSITION ALIMENTAIRE A BASE DE PRODUITS LAITIERS ET PROCEDE DE FABRICATION**

LEBENSMITTELZUSAMMENSETZUNG AUF BASIS VON MILCHPRODUKTEN, UND IHR HERSTELLUNGSVERFAHREN

FOOD COMPOSITION BASED ON DAIRY PRODUCTS AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.09.2016 FR 1658221**

(43) Date de publication de la demande:
**07.03.2018 Bulletin 2018/10**

(73) Titulaire: **SAVENCIA SA**
**78220 Viroflay (FR)**

(72) Inventeurs:
• **DA SILVA BOUCHER, Anne-Claire**
**78125 ORCEMONT (FR)**
• **MESTDAGH-ROMAN, Olesea**
**28100 DREUX (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-A1- 2 873 330**     **WO-A1-2014/142648**
**WO-A2-2007/017593**     **US-A1- 2008 113 067**
**US-A1- 2008 299 265**     **US-A9- 2009 263 557**
**US-B1- 6 488 971**

• **Helena Lindmark M?nsson: "Fatty acids in bovine milk fat", Food & Nutrition Research, 10 June 2008 (2008-06-10), pages 1-3, XP055372129, DOI: 10.3402/fnr.v52i0.1821 Retrieved from the Internet: URL:https://www.tandfonline.com/doi/full/1 0.3402/fnr.v52i0.1821 [retrieved on 2017-05-12]**

**Description**

La présente invention se rapporte au domaine de l'industrie alimentaire.

Elle vise plus spécifiquement une composition alimentaire composée majoritairement ou exclusivement de produits laitiers qui présente un comportement mécanique similaire à celui des produits chocolatés ou analogues, depuis une texture solide et cassante au doigt à température ambiante (environ 20°C), avec une texture fondante en bouche, jusqu'à la texture de pâte à tartiner, son procédé de préparation et son utilisation pour la préparation de produits alimentaires élaborés.

Cette composition alimentaire peut être utilisée en tant que produit fini, contenant ou non d'autres ingrédients ou encore en tant qu'enrobage d'un produit.

Il est connu de l'EP2873330 des compositions alimentaires capables d'empêcher la diffusion d'humidité au sein d'un produit alimentaire élaboré constitué de plusieurs composants ayant chacun une humidité différente ; ces compositions comprennent : a- de 0 à 50% en poids d'un ingrédient laitier ayant une faible teneur en minéraux, inférieure ou égale à 5,5% en poids ; b- de 0 à 25% en poids de dérivé du cacao ayant une faible teneur en minéraux, inférieure ou égale à 4,5% en poids ; c- de 0 à 2% en poids d'un émulsifiant ; d- de la matière grasse qui peut provenir de cacao ou de produits laitiers, elle est caractérisée par un profil particulier de température de fusion ; e- de 0 à 60% en poids d'au moins un sucre ou un polyol tel qu'une solution saturée de ce sucre ou polyol a une Aw d'au moins 0,84 ; caractérisé en ce que (i) la teneur totale en matière grasse est comprise entre 25 et 60% en poids ; et (ii) la teneur du cacao mentionné au point b- est d'au moins 2% en poids ou la teneur en émulsifiant du point c- est au moins 0,2% en poids si la teneur en ingrédient laitier du point a- est inférieure à 5%. Les compositions exemplifiées dans ce document contiennent toutes une part significative, bien supérieure à 1% en poids, d'ingrédients non laitiers, notamment de beurre de cacao.

Par ailleurs, la Demande de Brevet Américain US 2009/263557 décrit une confiserie à base de produits laitiers ayant une durée de conservation longue et une texture crémeuse et mousseuse comprenant : des produits dérivés du lait (de 5,5 à 20% en poids de protéines laitières ; de 14 à 55% en poids d'une poudre de lait dégraissée ; dont le degré de dénaturation des protéines de lactosérum est inférieur ou égal à 10%) ; de la matière grasse alimentaire sous une forme cristallisée à température ambiante ; un produit sucrant exempt de cristaux de lactose ; et de l'eau, ladite confiserie est telle que les particules de matière grasse alimentaire cristallisée ou non ont une taille D50,3 de 3,5 à 18 μm.

Dans le cadre de ses développements, la Demanderesse s'est donnée comme objectif de mettre au point une composition alimentaire ayant des propriétés proches de celle des produits de chocolat et qui soit composée exclusivement ou très majoritairement de produits laitiers.

La présente invention se rapporte ainsi à une composition alimentaire laitière consistant en :

-    15 à 80% en poids de matière grasse laitière par rapport au poids total de la composition, préférentiellement entre 20 et 60%, plus préférentiellement entre 30 et 45% ;
     la matière grasse laitière utilisée est issue du fractionnement physique et de la reformulation de matière grasse laitière. Elle est caractérisée par différentes courbes solide liquide selon le comportement mécanique cible de la composition.

Par exemple, dans le cas où la texture cible est un comportement cassant à température ambiante et fondant en bouche, la courbe solide liquide de la matière grasse laitière est définie comme suit :

| Température (°C) | 4 | 10 | 15 | 20 | 25 | 30 | 35 |
|---|---|---|---|---|---|---|---|
| Fourchette de % de taux de solide de matière grasse | 65 - 95 | 55 - 95 | 50 - 90 | 35 - 75 | 15 - 50 | 0 - 20 | 0 - 10 |

Dans le cas où la texture cible est un comportement tartinable, la courbe solide liquide de la matière grasse laitière est définie comme suit :

| Température (°C) | 4 | 10 | 15 | 20 | 25 | 30 | 35 |
|---|---|---|---|---|---|---|---|
| Fourchette de % de taux de solide de matière grasse | 0 - 30 | 0 - 20 | 0 - 15 | 0 - 10 | 0 - 5 | 0 - 1 | 0 - 1 |

-    5 à 45% en poids de protéines laitières par rapport au poids total de la composition, préférentiellement entre 7 et 30%, plus préférentiellement entre 10 et 25% ; la composition en protéines laitières présente un ratio Caséines/Protéines sériques compris entre 90/10 et 10/90 ;
-    25 à 80% en poids de glucides du lait par rapport au poids total de la composition, préférentiellement entre 35 et 70%, plus préférentiellement entre 40 à 60% ;

- optionnellement jusqu'à 1% en poids d'au moins un émulsifiant par rapport au poids total de la composition, préférentiellement jusqu'à 0,5% ; le ou les émulsifiants peuvent être choisis parmi la lécithine et/ou les phospholipides d'origine laitière ou végétale ;

cette composition se caractérise par :

- un extrait sec supérieur à 93% en poids par rapport au poids total de la composition et
- une granulométrie telle que le diamètre de Mie, diamètre de la particule dont le volume est la moyenne de ceux de toutes les particules de l'échantillon, (D[4,3]), mesuré en granulométrie laser, est compris entre 5 et 25 $\mu$m, préférentiellement entre 5 et 15 $\mu$m.

**Matière grasse laitière**

Afin d'apporter à la composition alimentaire laitière selon l'invention ses propriétés mécaniques spécifiques telles que définies ci-avant, elle est formulée à partir d'un ensemble de fractions de matières grasses laitières sélectionnées pour leur courbe solide-liquide spécifique. Grace à cette formulation spécifique, la matière grasse laitière est un facteur majeur pour l'obtention des propriétés de texture cible (soit les propriétés de cassant au doigt et de fondant en bouche à la composition, soit les propriétés de tartinabilité à température ambiante).

Les fonctionnalités mécaniques spécifiques de la matière grasse laitière peuvent être améliorées par la mise en œuvre d'une étape d'ensemencement en cristaux spécifiques ou d'une étape de pré-cristallisation lors de sa préparation ; ladite étape de pré-cristallisation consiste à imposer une cinétique de température à une composition alimentaire grasse (de façon à orienter le type polymorphique, la morphologie et la quantité de cristaux générés dans le produit fini). L'ensemble de ces techniques a pour but d'orienter le polymorphisme cristallin de la matière grasse.

De préférence, la matière grasse laitière utilisable pour la préparation de la composition alimentaire laitière selon l'invention a une teneur en triglycérides (TG) majoritaires décrite ci-dessous :

| Famille de triglycérides (TG) | Texture cassante g / 100g MG | Texture tartinable g / 100g MG |
|---|---|---|
| C36 | 2 - 17 | 8 - 11 |
| C38 | 1 - 18 | 10 - 18 |
| C48 | 5 - 25 | 6 - 10 |
| C50 | 1 - 30 | 5 - 12 |
| C52 | 5 - 25 | 9 - 13 |

et une teneur en acides gras majoritaires comme suit :

| Acides Gras (nombre d'atomes de carbone) | C4 | C6 | C14 | C16 | C18 | C18-1 |
|---|---|---|---|---|---|---|
| Texture cassante g / 100g MG | 0.2 - 5 | 0.2 - 3 | 7 - 11 | 28 - 40 | 8 - 17 | 10 - 30 |
| Texture tartinable g / 100g MG | 2,5 - 4,5 | 1,5 - 3,5 | 10 - 15 | 20 - 35 | 6 - 11 | 25 - 40 |

**Protéines laitières**

Les protéines laitières de la composition peuvent provenir de poudre de lait entier, écrémé, de concentré de protéines de lait, de lactosérum, de perméat d'ultrafiltration de lait... Le ratio caséines / protéines sériques est compris entre 90/10 et 10/90.

**Glucides de lait**

Les glucides de lait peuvent provenir de poudre de lait entier, écrémé, lactosérum, lactose purifié, lactose hydrolysé, glucose, galactose.

Selon un mode de réalisation particulier, la composition alimentaire laitière selon l'invention ne contient pas d'autres ingrédients que ceux précités.

**Caractérisation de la composition alimentaire laitière**

La composition alimentaire laitière selon l'invention a une couleur qui va du blanc au jaune. Les données de colorimétrie dans l'espace de couleur CIE L*a*b* peuvent varier comme suit :

| L (D65) | a* (D65) | b* (D65) |
|---------|----------|----------|
| 75 - 100 | -5 - +5 | +5 - +40 |

A 4°C, une méthode de compression 3 points adaptée de l'article paru dans Journal of Texture Studies, 30(1):1, 16 January 2007, permet d'obtenir sur une tablette de 20g, 4 cm de large et 8,5 cm de long et 0,6 cm d'épaisseur de la composition alimentaire ayant un comportement cassant à 4°C et fondant en bouche les valeurs suivantes :

| | Contrainte max (kPa) | Déformation à la contrainte maximale (%) |
|---|---|---|
| Fourchette | 850-1150 | 15-30 |

Sur les compositions alimentaires laitières selon l'invention, quelles que soient leurs propriétés (texture cassante ou tartinable), la méthode IOCCC 2000 permet d'obtenir les valeurs de viscosité et de thixotropie suivantes :

| $\sqrt{\tau} = \sqrt{\tau_0} + \sqrt{\eta_c \dot{\gamma}}$ Régression de Casson | $\tau 0$ (Pa) | $\eta c$ (Pa.s) | r |
|---|---|---|---|
| | 0.5 - 5 | 1 - 10 | 0,9999 |
| Thixotropie | 400 - 5 000 Pa.s$^{-1}$ | | |

**Procédé de fabrication de la composition alimentaire laitière selon l'invention**

L'originalité du procédé de fabrication de la composition alimentaire laitière selon l'invention réside dans la mise en œuvre de technologies habituellement utilisées en chocolaterie et qui sont appliquées à des produits laitiers : le broyage et conchage, et le cas échéant, l'ensemencement et / ou la pré-cristallisation.

Plus spécifiquement, le procédé de fabrication de la composition alimentaire selon l'invention comporte les étapes suivantes :

a. fonte de la matière grasse à une température comprise entre 40 et 80°C, préférentiellement entre 50 et 60°C ;

b. mélange en pétrin ou dans une cuve mélangeuse de la matière grasse laitière liquide avec les poudres comprenant les protéines et les glucides de lait entre 40 et 80°C, préférentiellement entre 50 et 60°C, pendant 1 à 10 minutes ;

c. broyage jusqu'à obtenir une granulométrie telle que le D[4,3] du mélange à l'issue du broyage est comprise entre 5 et 25 $\mu$m, préférentiellement entre 5 et 15 $\mu$m; les technologies utilisées peuvent être des broyeurs à cylindres, broyeurs à billes...

d. émulsification en conche, ou en pétrin du broyat entre 40 et 80°C, préférentiellement entre 50 et 60°C, pendant 1h à 5h ;

e. optionnellement, incorporation d'émulsifiants (lécithine ou phospholipides d'origine laitière ou végétale) pour assurer la stabilisation des particules solides en suspension dans la matière grasse et éventuellement une quantité de matière grasse laitière fondue comprise entre 0 et 30% en poids total du mélange ; cette opération permet d'ajuster le taux de matière grasse total tout en garantissant la qualité de l'opération de broyage ;

f. émulsification en conche ou en pétrin du mélange entre 40 et 80°C, préférentiellement entre 50 et 60°C, entre 12h et 18h.

Produits alimentaires élaborés préparés avec la composition alimentaire laitière selon l'invention

La composition alimentaire laitière selon l'invention peut être utilisée telle qu'elle ou bien en mélange avec d'autres ingrédients alimentaires pour la préparation d'un produit alimentaire élaboré ; ces ingrédients alimentaire peuvent être de nature et en proportion variable tels que des colorants ou des arômes, ou ayant un intérêt nutritionnel, par exemple des minéraux (exemple Calcium de 0 à 20 g/kg), des vitamines liposolubles et hydrosolubles (quantum satis), des fibres alimentaires (jusqu'à 10% m/m), des ferments (au moins 10$^6$ UFC/g de préparation)...

La composition alimentaire laitière selon l'invention peut encore être utilisée pour la préparation d'un produit alimentaire élaboré en mélange en proportion variable avec d'autres aliments, dont l'activité en eau (Aw) est inférieure ou égale à 0,87, comme des fruits séchés, des fruits confits, des fruits à coques, des céréales soufflées, des céréales en flocons, des céréales extrudées, des graines...

Selon les applications envisagées, la teneur en composition alimentaire laitière dans le produit alimentaire élaborée peut être très variable ; à titre indicatif, elle peut être comprise entre 15% et 95% par rapport au poids total du produit alimentaire élaboré.

Les produits alimentaires élaborés ainsi préparés peuvent consister en des bonbons, des barres, des produits fourrés ou moulés... La préparation alimentaire peut donc avantageusement remplacer les pâtes à glacer à base de matière grasse végétale non cacao pour l'enrobage des confiseries, ou le fourrage des biscuits et viennoiseries.

## Exemples

*1. Fabrication d'une composition laitière ayant des propriétés mécaniques de cassant à température ambiante et de fondant en bouche*

La composition finale contient 60% de poudre de lactosérum doux déminéralisé, 39,5% de matière grasse laitière anhydre et 0,5% de lécithine. Elle est préparée selon les conditions suivantes :

- fonte de la matière grasse laitière anhydre à la température de 50°C ;
- mélange en pétrin d'un ratio de matière grasse laitière anhydre liquide / poudre de 30/70 à 50°C, pendant 2 min ;
- broyage au broyeur 3 cylindres jusqu'à obtenir une granulométrie telle que le D[4,3] du mélange soit comprise inférieure à 15 $\mu$m ;
- conchage, à 55°C pendant 2h30 ;
- incorporation de lécithine et ajout éventuel de matière grasse laitière anhydre fondue pour atteindre les proportions de la composition finale ;
- conchage à 55°C pendant 12h.

Le mélange de matières grasses laitières anhydre utilisé dans la composition suit la courbe de solide-liquide suivante :

| Température (°C) | 4 | 10 | 15 | 20 | 25 | 30 | 35 |
|---|---|---|---|---|---|---|---|
| Fourchette de % de taux de solide de matière grasse | 72 | 67 | 60 | 43 | 15 | 1 | 0 |

une teneur en triglycérides (TG) majoritaires décrite ci-dessous

| Famille de triglycérides (TG) | g / 100g MG |
|---|---|
| C36 | 11 |
| C38 | 11 |
| C48 | 14 |
| C50 | 3 |
| C52 | 8 |

et une teneur en acides gras majoritaires comme suit :

| Acides Gras (nombre d'atomes de carbone) | C4 | C6 | C14 | C16 | C18 | C18-1 |
|---|---|---|---|---|---|---|
| g / 100g MG | 4 | 2.7 | 10 | 33 | 11 | 15 |

La composition finale est caractérisée par un D[4.3] de 10.6$\mu$m, des valeurs dans l'espace de couleur CIE L*a*b* de (L*:81.20 ; a*:-2.12 ; b*:24.90) et une thixotropie de 124.9 et une viscosité selon la méthode IOCCC 2000 :

| Caractéristiques de viscosité selon Casson | | |
|---|---|---|
| $\tau 0$ | $\eta c$ | R |
| 2,12 | 0,95 | 0,999 |

*2. Cristallisation de la composition laitière préparée en 1 ayant des propriétés mécaniques proches d'un chocolat de couverture.*

Avant moulage, la composition laitière préparée selon le procédé de l'exemple 1 est soumise à l'étape de cristallisation suivante : décristallisation par fonte de la composition à 60°C, refroidissement à 18°C, stabilisation 10 min à 18°C, réchauffage à 25°C, stabilisation 5 min à 25°C puis moulage. La composition laitière ainsi moulée est stockée à 4°C.

*3. Préparation d'un produit alimentaire élaboré (barres laitières aux fruits) à partir de la composition laitière préparée en 1 ayant des propriétés mécaniques proches d'un chocolat de couverture.*

La composition laitière est fondue au bain marie à 50°C, puis refroidie jusqu'à obtention d'une texture pommadée. Elle est alors foisonnée au batteur électrique puis moulée dans des moules en silicone rectangulaires de dimension (1*L*h) 2.5*5*1cm. Des morceaux de fraise séchée, d'amande émondée et de noix de coco rapée sont disposés à la surface de la composition laitière moulée. Le tout est refroidi à 4°C puis démoulée. Le ratio final fruits / composition laitière est de 25/75.

*4. Préparation de produit alimentaire élaboré (barres laitières aux céréales) à partir de la composition laitière préparée en 1 ayant des propriétés mécaniques proche d'un chocolat de couverture.*

La composition laitière est fondue au bain marie à 50°C, puis mélangée avec des flocons de céréales soufflées. Elle est alors moulée dans des moules en silicone rectangulaires de dimension (1*L*h) 2.5*5*1cm. Le tout est refroidi à 4°C puis démoulée. Le ratio final céréales / composition laitière est de 50/50.

*5. Utilisation de la composition laitière préparée en 1 ayant des propriétés mécaniques proche d'un chocolat de couverture en enrobage d'un produit frais fromager.*

Une base de fromage frais sous forme de barre de dimension (1*L*h) 2.5*7*1.5cm est enrobée avec la composition laitière préalablement chauffée à 75°C sur un équipement d'enrobage à lit tombant, classiquement utilisée en chocolaterie. Le produit est ensuite refroidi à 4°C.
Dans une seconde réalisation, la composition laitière est co-dosée en même temps qu'une base fromagère fondue, en technologie One Shot, de sorte que la composition laitière enrobe la base fromagère fondue avec un ratio enrobant/enrobé de 30/70.

*6. Fabrication d'une composition laitière selon l'invention ayant des propriétés de tartinabilité au-dessus de 4°C*

La composition finale contient 30% de poudre de lactosérum doux déminéralisé, 20% de poudre de lactose pur, 5% de poudre de lait entier, 5% de poudre de protéines laitières concentrées, 39.5% de matière grasse laitière anhydre et 0,5% de lécithine. Elle est préparée selon les conditions suivantes :

- fonte de la matière grasse à la température de 40°C ;
- mélange en pétrin d'un ratio de matière grasse laitière ahydre liquide / poudre de 30/70 à 50°C, pendant 2 min ;
- broyage au broyeur 3 cylindres jusqu'à obtenir une granulométrie telle que la D(4,3) du mélange soit comprise inférieure à 15 $\mu$m ;
- conchage, à 55°C pendant 2h30 ;
- incorporation de lécithine et de matière grasse fondue pour atteindre les proportions de la composition finale ;
- conchage à 50°C pendant 12h.

Le mélange de matières grasses laitières utilisé dans la composition suit la courbe de solide-liquide suivante :

| Température (°C) | 4 10 | | 15 | 20 | 25 | 30 | 35 |
|---|---|---|---|---|---|---|---|
| Fourchette de % de taux de solide de matière grasse | 2.5 | 1.9 | 1.2 | 1.1 | 0.5 | 0 | 0 |

une teneur en triglycérides (TG) majoritaires décrite ci-dessous :

| Famille de triglycérides (TG) | g / 100g MG |
|---|---|
| C36 | 10 |
| C38 | 14 |
| C48 | 6 |
| C50 | 7 |
| C52 | 9 |

et une teneur en acides gras majoritaires comme suit :

| Acides Gras (nombre d'atomes de carbone) | C4 | C6 | C14 | C16 | C18 | C18-1 |
|---|---|---|---|---|---|---|
| g / 100g MG | 4 | 3 | 14 | 33 | 6 | 32 |

La composition peut être utilisée tel que ou en tant que fourrage de produit sec.

**Revendications**

1. Composition alimentaire laitière consistant en :

   - 15 à 80% en poids de matière grasse laitière par rapport au poids total de la composition ; dans le cas où la texture cible de ladite composition alimentaire laitière est un comportement cassant à température ambiante et fondant en bouche, la courbe solide liquide de la matière grasse laitière est définie comme suit :

| Température (°C) | 4 | 10 | 15 | 20 | 25 | 30 | 35 |
|---|---|---|---|---|---|---|---|
| Fourchette de % de taux de solide de matière grasse | 65 - 95 | 55 - 95 | 50 - 90 | 35 - 75 | 15-50 | 0 -20 | 0 - 10 |

   dans le cas un la texture cible de ladite composition alimentaire laitière est un comportement tartinable, la courbe solide liquide de la matière grasse laitière est définie comme suit :

| Température (°C) | 4 | 10 | 15 | 20 | 25 | 30 | 35 |
|---|---|---|---|---|---|---|---|
| Fourchette de % de taux de solide de matière grasse | 0 - 30 | 0 - 20 | 0 - 15 | 0 - 10 | 0 - 5 | 0 - 1 | 0 - 1 |

   - 5 à 45% en poids de protéines laitières par rapport au poids total de la composition ;
   - 25 à 80% en poids de glucides du lait par rapport au poids total de la composition ;
   - optionnellement jusqu'à 1 % en poids d'au moins un émulsifiant par rapport au poids total de ladite composition alimentaire laitière ;

   ladite composition alimentaire laitière est telle que :

   - elle contient un extrait sec supérieur à 93% en poids par rapport au poids total de la composition et
   - elle a une granulométrie telle que son diamètre de Mie D[4,3] est compris entre 5 et 25 $\mu$m.

2. Composition alimentaire laitière selon la revendication 1, **caractérisée en ce que** ladite matière grasse laitière a une teneur en triglycérides (TG) majoritaires comme suit :

| Famille de triglycérides (TG) | Texture cassante g / 100g MG | Texture tartinable g / 100g MG |
|---|---|---|
| C36 | 2 - 17 | 8 - 11 |
| C38 | 1 - 18 | 10 - 18 |
| C48 | 5 - 25 | 6 - 10 |
| C50 | 1 - 30 | 5 - 12 |
| C52 | 5 - 25 | 9 - 13 |

et une teneur en acides gras majoritaires comme suit :

| Acides Gras (nombre d'atomes de carbone) | C4 | C6 | C14 | C16 | C18 | C18-1 |
|---|---|---|---|---|---|---|
| Texture cassante g / 100g MG | 0.2 - 5 | 0.2 - 3 | 7 - 11 | 28 - 40 | 8 - 17 | 10 - 30 |
| Texture tartinable g / 100g MG | 2,5-4,5 | 1,5-3,5 | 10 - 15 | 20 - 35 | 6 - 11 | 25 - 40 |

3. Composition alimentaire laitière selon la revendication 1 ou la revendication 2, **caractérisée en ce que** lesdites protéines laitières sont choisies parmi la poudre de lait entier, la poudre de lait écrémé, de concentré de protéines de lait, de lactosérum, de perméat d'ultrafiltration de lait et **en ce que** le ratio caséines / protéines sériques est compris entre 90/10 et 10/90.

4. Composition alimentaire laitière selon l'une quelconque des revendications précédentes, **caractérisée en ce que** les glucides de lait sont choisis parmi ceux présents dans la poudre de lait entier, la poudre de lait écrémé, le lactosérum, le lactose purifié, le lactose hydrolysé, le glucose et le galactose.

5. Procédé de fabrication d'une composition alimentaire laitière selon l'une quelconque des revendications précédentes, comprenant les étapes suivantes :

    a. fonte de ladite matière grasse laitière à une température comprise entre 40°C et 80°C ;
    b. mélange en pétrin ou dans une cuve mélangeuse de ladite matière grasse laitière liquide avec les poudres comprenant lesdites protéines de lait et lesdits glucides de lait entre 40 et 80°C pendant 1 à 10 minutes ;
    c. broyage du mélange obtenu à l'étape b) jusqu'à obtenir une granulométrie telle que le D[4,3] du mélange à l'issue du broyage est comprise entre 5 et 25 $\mu$m ;
    d. émulsification en conche ou en pétrin du broyat obtenu à l'étape c) entre 40 et 80°C pendant 1h à 5h ;
    e. optionnellement, incorporation d'émulsifiants et d'une quantité de matière grasse laitière fondue comprise entre de 0 à 30% en poids total du mélange ;
    f. émulsification en conche ou en pétrin du mélange obtenu à l'étape précédente entre 40 et 80°C, entre 12h et 18h.

6. Utilisation de la composition alimentaire laitière selon l'une quelconque des revendications 1 à 4 pour la préparation d'un produit alimentaire élaboré.

7. Produit alimentaire élaboré consistant en la composition alimentaire laitière selon l'une quelconque des revendications 1 à 4 et au moins un ingrédient choisi parmi les colorants, les arômes, les minéraux, les vitamines liposolubles et hydrosolubles, les fibres alimentaires et les ferments et/ou au moins un aliment choisi parmi les fruits séchés, les fruits confits, les fruits à coques, les céréales soufflées, les céréales en flocons, les céréales extrudées et les graines, ledit autre aliment ayant une activité en eau (Aw) inférieure ou égale à 0,87.

8. Produit alimentaire élaboré selon la revendication 7, **caractérisé en ce qu'**il comprend entre 15% et 95% de ladite composition alimentaire laitière.

# EP 3 289 884 B1

**Patentansprüche**

1. Milchprodukt-Lebensmittelzusammensetzung, bestehend aus:

   - 15 bis 80 Gew.-% Milchfett in Bezug auf das Gesamtgewicht der Zusammensetzung; für den Fall, dass die Zieltextur der Milchprodukt-Lebensmittelzusammensetzung ein bei Umgebungstemperatur sprödes, und im Mund schmelzendes Verhalten ist, ist die Flüssig-Fest-Kurve des Milchfetts wie folgt definiert:

   | Temperatur (°C) | 4 | 10 | 15 | 20 | 25 | 30 | 35 |
   |---|---|---|---|---|---|---|---|
   | Prozentsatzspanne von Fett-Feststoffgehalt | 65 - 95 | 55 - 95 | 50 - 90 | 35 - 75 | 15 - 50 | 0 - 20 | 0 - 10 |

   für den Fall, dass die Zieltextur der Milchprodukt-Lebensmittelzusammensetzung ein streichbares Verhalten ist, ist die Flüssig-Fest-Kurve des Milchfetts wie folgt definiert:

   | Temperatur (°C) | 4 | 10 | 15 | 20 | 25 | 30 | 35 |
   |---|---|---|---|---|---|---|---|
   | Prozentsatzspanne von Fett-Feststoffgehalt | 0 - 30 | 0 - 20 | 0 - 15 | 0 - 10 | 0 - 5 | 0 - 1 | 0 - 1 |

   - 5 bis 45 Gew.-% Milchproteine in Bezug auf das Gesamtgewicht der Zusammensetzung;
   - 25 bis 80 Gew.-% Milchkohlenhydrate in Bezug auf das Gesamtgewicht der Zusammensetzung;
   - wahlweise bis zu 1 Gew.-% mindestens eines Emulgators in Bezug auf das Gesamtgewicht der Milchprodukt-Lebensmittelzusammensetzung ;

   wobei die Milchprodukt-Lebensmittelzusammensetzung derart ist, dass:

   - sie einen Trockenextrakt von mehr als 93 Gew-% in Bezug auf das Gesamtgewicht der Zusammensetzung enthält und
   - sie eine Körnung derart aufweist, dass ihr Mie D[4,3]-Durchmesser zwischen 5 und 25 $\mu$m enthalten ist.

2. Milchprodukt- Lebensmittelzusammensetzung nach Anspruch 1, **dadurch gekennzeichnet, dass** das Milchfett einen Gehalt an mehrheitlichen Triglyzeriden (TG) wie folgt aufweist:

   | Familie der Triglyzeride (TG) | Spröde Textur g / 100g Ft | Streichbare Textur g / 100g Ft |
   |---|---|---|
   | C36 | 2- 17 | 8 - 11 |
   | C38 | 1 - 18 | 10 - 18 |
   | C48 | 5 - 25 | 6 - 10 |
   | C50 | 1 - 30 | 5 - 12 |
   | C52 | 5 - 25 | 9 - 13 |

   und einen Gehalt an mehrheitlichen Fettsäuren wie folgt:

   | Fettsäuren (Anzahl von Kohlenstoffatomen) | C4 | C6 | C14 | C16 | C18 | C18-1 |
   |---|---|---|---|---|---|---|
   | Spröde Textur g / 100g Ft | 0,2 - 5 | 0,2 - 3 | 7 - 11 | 28 - 40 | 8 - 17 | 10 - 30 |
   | Streichbare Textur g / 100g Ft | 2,5 -4,5 | 1,5 -3,5 | 10 - 15 | 20 - 35 | 6 - 11 | 25 - 40 |

3. Milchprodukt-Lebensmittelzusammensetzung nach Anspruch 1 oder Anspruch 2, **dadurch gekennzeichnet, dass** die Milchproteine ausgewählt sind aus Vollmilchpulver, Magermilchpulver, Milchproteinkonzentrat, Molke, Milch-Ultrafiltrationspermeat und dadurch, dass das Verhältnis von Serumkaseinen / -proteinen zwischen 90/10 und 10/90 beträgt.

4. Milchprodukt-Lebensmittelzusammensetzung nach einem der vorstehenden Ansprüche, **dadurch gekennzeichnet, dass** die Milchkohlenhydrate ausgewählt sind aus jenen, die im Vollmilchpulver, dem Magermilchpulver, der Molke, der reinen Lactose, der hydrolysierten Lactose, der Glucose und der Galactose vorhanden sind.

5. Verfahren zur Herstellung einer Milchprodukt-Lebensmittelzusammensetzung nach einem der vorstehenden Ansprüche, umfassend die folgenden Schritte:

a. Schmelzen des Milchfetts bei einer Temperatur, die zwischen 40 °C und 80 °C enthalten ist;
b. Mischen des flüssigen Milchfetts mit den Pulvern, die die Milchproteine und die Milchkohlenhydrate umfassen, in einer Knetmaschine oder einem Mischbehälter zwischen 40 und 80 °C, 1 bis 10 Minuten lang;
c. Zerkleinern des in Schritt b) erhaltenen Gemischs bis zum Erhalten einer Körnung derart, dass D[4,3] des Gemischs am Ende des Zerkleinerns zwischen 5 und 25 $\mu$m enthalten ist;
d. Emulgieren der in Schritt c) erhaltenen zerkleinerten Masse in einer Wanne oder in einer Knetmaschine zwischen 40 und 80 °C 1 Stunde bis 5 Stunden lang;
e. wahlweise, Zugabe von Emulgatoren und einer Menge an geschmolzenem Milchfett, die zwischen 0 und 30 % des Gesamtgewichts des Gemischs beträgt;
f. Emulgieren des im vorstehenden Schritt erhaltenen Gemisches in einer Wanne oder in einer Knetmaschine zwischen 40 und 80 °C, zwischen 12 Stunden und 18 Stunden lang.

6. Verwendung der Milchprodukt-Lebensmittelzusammensetzung nach einem der Ansprüche 1 bis 4 für die Zubereitung eines ausgearbeiteten Lebensmittelprodukts.

7. Ausgearbeitetes Lebensmittelprodukt, bestehend aus der Milchprodukt-Lebensmittelzusammensetzung nach einem der Ansprüche 1 bis 4 und mindestens einer Zutat, die ausgewählt ist aus den Farbstoffen, den Aromen, den Mineralen, den fettlöslichen und wasserlöslichen Vitaminen, den Ballaststoffen und den Fermenten und/oder mindestens einem Nahrungsmittel, das ausgewählt ist aus den getrockneten Früchten, den kandierten Früchten, den Schalenfrüchten, den gepufften Getreiden, den geflockten Getreiden, den extrudierten Getreiden und den Körnern, wobei das andere Nahrungsmittel eine Wasseraktivität (Aw) von kleiner oder gleich 0,87 aufweist.

8. Ausgearbeitetes Lebensmittelprodukt nach Anspruch 7, **dadurch gekennzeichnet, dass** es zwischen 15 % und 95 % der Milchprodukt-Lebensmittelzusammensetzung umfasst.

**Claims**

1. Dairy food composition consisting of:

- 15 to 80% by weight of milk fat relative to the total weight of the composition;

in the case where the target texture of said dairy food composition is a brittle behaviour at room temperature with a melting texture in the mouth, the solid liquid curve of the milk fat is defined as follows:

| Temperature (°C) | 4 | 10 | 15 | 20 | 25 | 30 | 35 |
|---|---|---|---|---|---|---|---|
| % range of fat solid ratio | 65-95 | 55-95 | 50-90 | 35-75 | 15-50 | 0-20 | 0-10 |

in the case where the target texture of said dairy food composition is a spreadable behaviour, the solid liquid curve of the milk fat is defined as follows:

| Temperature (°C) | 4 | 10 | 15 | 20 | 25 | 30 | 35 |
|---|---|---|---|---|---|---|---|
| % range of fat solid ratio | 0-30 | 0-20 | 0-15 | 0-10 | 0-5 | 0-1 | 0-1 |

- 5 to 45% by weight of milk proteins relative to the total weight of the composition;
- 25 to 80% by weight of milk carbohydrates relative to the total weight of the composition;
- optionally up to 1% by weight of at least one emulsifier relative to the total weight of said dairy food composition;

said dairy food composition is such that:

- it contains a dry extract greater than 93% by weight relative to the total weight of the composition, and
- it has a particle size such that its Mie diameter D [4.3] is between 5 and 25μm.

2. Dairy food composition according to claim 1, **characterised in that** said milk fat has a majority content in triglycerides (TG) as follows:

| Triglyceride (TG) family | Brittle texture g/100g MG | Spreadable texture g/100g MG |
|---|---|---|
| C36 | 2-17 | 8-11 |
| C38 | 1-18 | 10-18 |
| C48 | 5-25 | 6-10 |
| C50 | 1-30 | 5-12 |
| C52 | 5-25 | 9-13 |

and a majority fatty acid content as follows:

| Fatty Acids (number of carbon atoms) | C4 | C6 | C14 | C16 | C18 | C18-1 |
|---|---|---|---|---|---|---|
| Brittle texture g/100g MG | 0.2-5 | 0.2-3 | 7-11 | 28-40 | 8-17 | 10-30 |
| Spreadable texture g/100g MG | 2.5-4.5 | 1.5-3.5 | 10-15 | 20-35 | 6-11 | 25-40 |

3. Dairy food composition according to claim 1 or claim 2, **characterised in that** said milk proteins are selected from whole milk powder, skimmed milk powder, milk protein concentrate, whey, milk ultrafiltration permeate and **in that** the serum casein/protein ratio is between 90/10 and 10/90.

4. Dairy food composition according to any one of the preceding claims, **characterised in that** the milk carbohydrates are selected from those present in whole milk powder, skimmed milk powder, whey, purified lactose, hydrolysed lactose, glucose and galactose.

5. Method for manufacturing a dairy food composition according to any one of the preceding claims, comprising the following steps:

a. melting said milk fat at a temperature between 40°C and 80°C;
b. mixing in a kneader or in a mixing vessel, said liquid milk fat with powders comprising said milk proteins and said milk carbohydrates between 40 and 80°C for 1 to 10 minutes;
c. grinding the mixture obtained in step b) until a particle size is obtained such that the D [4.3] of the mixture after grinding is between 5 and 25μm;
d. emulsification, in a conche or kneader of the ground material obtained in step c) between 40 and 80°C for 1 to 5 hours;
e. optionally, incorporation of emulsifiers and a quantity of molten milk fat of between 0 and 30% by total weight of the mixture;
f. emulsification, in a conche or kneader of the mixture obtained in the preceding step between 40 and 80°C, between 12 and 18 hours.

6. Use of the dairy food composition according to any one of claims 1 to 4 for the preparation of a prepared food product.

7. Prepared food product consisting of the dairy food composition according to any one of claims 1 to 4, and at least one ingredient selected from colourants, flavours, minerals, fat-soluble and water-soluble vitamins, dietary fibre and ferments and/or at least one food selected from dried fruits, candied fruits, nuts, puffed cereals, flaked cereals, extruded cereals and seeds, said other food having a water activity (Aw) less than or equal to 0.87.

8. Prepared food product according to claim 7, **characterised in that** it comprises between 15% and 95% of said dairy

food composition.

## RÉFÉRENCES CITÉES DANS LA DESCRIPTION

**Documents brevets cités dans la description**

- EP 2873330 A

- US 2009263557 A

**Littérature non-brevet citée dans la description**

- *Journal of Texture Studies,* 16 Janvier 2007, vol. 30 (1), 1